# EUROPÄISCHE PATENTSCHRIFT

(11) **EP 3 600 872 B1**
(45) Veröffentlichungstag und Bekanntmachung des Hinweises auf die Patenterteilung: **17.08.2022**
(21) Anmeldenummer: 18716526.1
(22) Anmeldetag: 20.03.2018
(51) Int. Cl.: B32B 5/02, B32B 5/26, B32B 5/24, B32B 5/30, B64D 11/06, A47C 7/26, B64D 45/00

(54) **FLAMMENSCHUTZGEWEBE FÜR FAHRZEUGSITZE, INSBESONDERE FÜR FLUGZEUGSITZE**
FLAME-RETARDANT FABRIC FOR VEHICLE SEATS, PARTICULARLY FOR AIRPLANE SEATS
TISSU IGNIFUGE POUR SIÈGES DE VÉHICULES, NOTAMMMENT POUR SIÈGES D'AVION

(30) Priorität: 29.03.2017 DE 102017205284
(43) Veröffentlichungstag der Anmeldung: 05.02.2020
(73) Patentinhaber: NEVEON Austria GmbH, 4550 Kremsmünster (AT)
(72) Erfinder: HESSENBERGER, Norbert Karl, 4694 Ohlsdorf (AT)
(74) Vertreter: Maikowski & Ninnemann Patentanwälte Partnerschaft mbB
(86) Internationale Anmeldenummer: PCT/EP2018/057005
(87) Internationale Veröffentlichungsnummer: WO 2018/177808

(56) Entgegenhaltungen:
- DE-A1-102010 009 351
- GB-A- 2 191 792
- JP-A- 2009 120 994
- US-A- 4 750 443
- US-A1- 2002 182 967

## Beschreibung

Die vorliegende Erfindung betrifft ein Flammenschutzgewebe für ein Fahrzeugkissen, ein Verfahren zur Herstellung eines solchen Flammenschutzgewebes, eine Abdeckung für ein Fahrzeugkissen mit solch einem Flammenschutzgewebe und ein Kissen.

### Beschreibung

Die vorliegende Erfindung bezieht sich auf einen Gewebe mit Flammenschutzeigenschaften, das geeignet ist zur Anwendung in Fahrzeugkissen, insbesondere Flugzeugkissen, ist aber auch geeignet zur Anwendung in Automobilen, Bussen oder Zügen.

In Hinblick auf Anwendung im Flugzeugverkehr müssen Standardvorschriften hinsichtlich Flammen- und Hitzebeständigkeit durch ein solches Flammenschutzgewebe erfüllt werden. Der Schutz durch ein Flammenschutzgewebe, der gegeben sein muss, ist sowohl von der Art des Kissen abhängig, der durch das Flammenschutzgewebe abgedeckt wird, als auch von einem äußeren Überzug bzw. Obermaterial.

Verschiedene Ansätze zur Erhöhung der Flammenbeständigkeit von Kissen, die für Flugzeugstrukturen wie Flugzeugsitze einsetzbar sind, sind bekannt.

So wird in der US 6,790,795 B2 ein Flammenschutzgewebe beschrieben, welches aus einem Gewebevlies aus Para-Aramid- und pre-oxidierten Polyacrylnitril (pre-ox PAN) Fasern besteht und ein Flächengewicht zwischen 100-475 g/m² aufweist. Das Gewebevlies wird durch ein Gewebegitter aus Meta-Aramid Fasern, wie zum Beispiel Nomex-Fasern, gestützt. Gewebevlies und Gewebegitter formen zusammen das Flammenschutzgewebe, welches zusammen mit einem geeigneten Überzug auf einem Sitzkissen befestigt wird.

Zwar stellt dieses Flammenschutzgewebe einen erhöhten Flammenschutz bereit, weist allerdings eine relativ niedrige Abriebbeständigkeit auf, so dass ein häufiger Austausch der Abdeckung enthaltend ein solches Flammenschutzgewebe erfolgen muss. Dies verursacht lange Standzeiten der Flugzeuge und damit verbundene hohe Kosten.

DE102010009351 A1 offenbart ein Flammenschutzgewebe für Fahrzeugkissen bereitgestellt, wobei das Flammenschutzgewebe folgende Schichten umfasst: eine erste Schicht umfassend einen Textilstoff aus para-aramid, und eine zweite Schicht als Barriereschicht umfassend ein Faservlies aus einer flammenfesten para-aramid, wobei die erste Schicht auf einer Seite der Barriereschicht als zweite Schicht vorgesehen ist. US2002/182967A1 offenbart ein Flammenschutzgewebe für Fahrzeugkissen bereitgestellt, wobei das Flammenschutzgewebe folgende Schichten umfasst: eine gewebte Gitterschicht aus meta-aramid-Fasern; und eine zweite Schicht als Barriereschicht umfassend ein Faservlies aus 10-90% para-aramid Fasern und 90-10% oxidiertes Polyacrylonitril. Die gewebte Gitterschicht ist auf einer Seite der Barriereschicht als zweite Schicht vorgesehen. US4750443A offenbart auch eine ähnliche Flammenschutzgewebe für Fahrzeugkissen.

Der vorliegenden Erfindung liegt nunmehr die Aufgabe zugrunde, ein Flammenschutzgewebe für Kissen für einen Fahrzeugstrukturen, wie zum Beispiel für Flugzeugstrukturen bereitzustellen, die über eine hohe Flammenbeständigkeit bei gleichzeitiger hoher Abriebfestigkeit und geringem Gewicht verfügen und zudem in einfacher Weise an Kissen einer Flugzeugstruktur, wie z.B. Sitzkissen, Rückenlehnenkissen, Kopfkissen, Armlehnenkissen oder Kissen für Beinauflagen befestigbar sind.

Diese Aufgabe wird mit einem Flammenschutzgewebe (oder auch Feuerblocker) mit den Merkmalen des Anspruchs 1 gelöst.

Entsprechend wird ein Flammenschutzgewebe für Fahrzeugkissen, insbesondere für Flugzeugkissen, bereitgestellt, wobei das Flammenschutzgewebe folgende Schichten umfasst:
- mindestens eine erste abriebfeste Schicht als Abrasionsschicht umfassend mindestens einen Textilstoff mit hoher Abriebbeständigkeit aus mindestens einer Faserart, und
- mindestens eine zweite Schicht als Barriereschicht umfassend mindestens ein Faservlies aus mindestens einer flammenfesten Faserart,
wobei die mindestens eine Abrasionsschicht als erste Schicht auf mindestens einer Seite der mindestens einen Barriereschicht als zweite Schicht vorgesehen ist, gekennzeichnet durch mindestens eine Intumeszenz-Schicht aus Blähgraphit vorgesehen als Zwischenlage zwischen der mindestens einen Abrasionsschicht und der mindestens einen Barriereschicht, wobei die mindestens eine Blähgraphitschicht ein Flächengewicht zwischen 30 und 110 g/m² aufweist.

Es wird somit ein Flammenschutzgewebe aus mindestens drei Schichten bzw. drei Lagen aus unterschiedlichen Materialien hergestellt, wobei die erste Schicht eine hohe Abriebbeständigkeit und die zweite Schicht eine hohe Flammenbeständigkeit aufweist. Beide Schichten umfassen bevorzugt unterschiedliche Anteile an flammenbeständigen Fasern, die sowohl über ein geringes Flächen- bzw. Eigengewicht als auch eine hohe Flammen- und Hitzebeständigkeit verfügen und die regulatorischen Vorschriften genügen und Teststandards erfüllen. Gleichzeitig verfügt das vorliegende Flammenschutzgewebe über eine hohe Abriebbeständigkeit. Somit sind in dem erfindungsgemäßen Flammenschutzgewebe hohe Abriebfestigkeit bei gegenüber bekannten Geweben gleichbleibender oder verbesserter Brandstabilität kombiniert.

So weist die mindestens eine Abrasionsschicht im vorliegenden Flammenschutzgewebe eine Abriebbeständigkeit von mindestens 30.000 Zyklen, bevorzugt von mindesten 45.000 Zyklen, insbesondere von mindestens 55.000 Zyklen, ganz besonders bevorzugt von mindestens 150.000 Zyklen auf. Die Abriebbeständigkeit wird nach Martinedale DIN ISO 12947 1;BS 5960; 1988 bestimmt. In dem Testverfahren nach Martindale wird als Standardmaterial Baumwolle verwendet. Die erforderliche Höhe der Abriebfestigkeit des Flammenschutzgewebes ist von der anvisierten Verwendung beeinflusst. So hängt die Abriebfestigkeit von der Flugzeugstruktur ab z.B. Sitzbodenschale bzw. Gewebe (Diaframe) oder Rückenlehne Struktur, in oder an welcher das Flammenschutzgewebe eingesetzt wird. Vorliegend wird angestrebt, ein Flammenschutzgewebe bereitzustellen, welches für alle Flugzeugstrukturen einsetzbar ist.

In einem weiteren Ansatz zur Bestimmung der Abriebbeständigkeit des Flammenschutzgewebes wurde als interner Standard ein Hackenband aus Polyamid (Klettband) verwendet, der die realen Anwendungsbedingungen in einem Flugzeugsitz besser widerspiegelt. Hier erreichte das vorliegende Gewebe Abriebwerte von mindestens 4000 Zyklen, wohingegen die Abriebwerte von konventionellen Geweben wie z.B. von 7725R von Tex Tech Industries bei 500-600 Zyklen liegt.

Die hohe Abriebbeständigkeit des für die Abrasionsschicht verwendeten Textilstoffes wird insbesondere durch eine große Engmaschigkeit und geringen Faserabstand der im Textilstoff verwendeten Fasern bedingt. Entsprechend liegt die Zugfestigkeit des für die Abrasionsschicht verwendeten Textilstoffes in einem Bereich zwischen 700 und 1200 N/25mm, bevorzugt zwischen 800 und 1100 N/25mm, insbesondere bevorzugt zwischen 850 und 1000 N/25mm in der Längsrichtung und in einem Bereich zwischen 400 und 800 N /25mm, bevorzugt zwischen 500 und 700 N/25mm, insbesondere bevorzugt zwischen 500 und 600 N/25mm in der Querrichtung. Die Zugfestigkeit wird nach DIN 53357-A mit einem 25 mm breiten Band bestimmt.

Der als Abrasionsschicht verwendete Textilstoff kann ein Gewebe, ein Gewirke oder ein Gestricke sein. Dabei ist es bevorzugt, wenn der verwendete Textilstoff auf der Vorderseite und der Rückseite die gleiche Optik aufweist.

Vorliegend ist unter einem Gewebe ein textiles Flächengewebe aus mindestens zwei rechtwinklig oder nahezu rechtwinklig verkreuzten Fadensystemen zu verstehen, wobei die in Längsrichtung verlaufenden Fäden als Kettfäden bezeichnet werden und die in Querrichtung verlaufenden Fäden als Schussfäden bezeichnet werden. Die Fäden gehen in einem bestimmten Rhythmus (Bindung) über und unter den querliegenden Fäden durch. Im vorliegend als Abrasionsschicht vewendeten Gewebe liegen eine Faser in Kettrichtung und eine Faser in Schussrichtung aneinander. Hierdurch wird eine hohe Engmaschigkeit bewirkt,

Ein Gewirke und ein Gestricke hingegen sind Maschenwaren und werden aus Fadensystemen durch Maschenbildung hergestellt, wobei eine Fadenschlinge in eine andere Fadenschlinge geschlungen wird. Im Falle eines Gestrickes wird eine Masche neben der anderen hergestellt, d.h. der Faden verläuft horizontal; während im Falle eines Gewirkes der Faden übereinander stehende Maschen bildet, d.h. der Faden verläuft senkrecht. Auch hier wird durch einen geringen Faserabstand eine hohe Engmaschigkeit bewirkt.

In einer Ausführungsform kann die in der Abrasionsschicht verwendete Faserart synthetische oder natürliche Fasern umfassen.

Als synthetische Fasern können Polymerfasern ausgewählt aus der Gruppe der Polyacrylnitrilfasern (PAN-Faser), preoxidierte PAN-Fasern, Polyaramid-Fasern, wie para-Aramid-Fasern (Kevlar) oder meta-Aramid-Fasern (Nomex), Kynol-Novoloid oder Carbon-Fasern verwendet werden. Auch flammschutzausgerüstete Fasern können verwendet werden. Bevorzugte Fasern sind para-Aramid Fasern (oder alternativ meta-Aramid-Fasern) und Polyacrylnitrilfasern (PAN-Faser).

Als natürliche Fasern können flammgeschützete Samenfasern wie z.B. Baumwollfasern oder flammgeschützte Bastfasern wie z.B. Hanffasern verwendet werden.

In einer weiteren Ausführungsform des vorliegenden Flammenschutzgewebes kann die Abrasionsschicht auch aus mehr als einer Faserart bestehen. Bevorzugt sind zwei, drei oder vier verschiedene Faserarten, wobei Faserart und Faseranteile beliebig kombiniert und variiert werden können. In einer bevorzugten Ausführungsform werden lediglich zwei Faserarten verwendet, wobei poly-Aramid Fasern und Polyacrylnitrilfasern (PAN-Faser) bevorzugt sind.

So können im Falle der Verwendung von zwei Faserarten in der Abrasionsschicht die quantitativen Anteile jeweils beliebig in einem Bereich zwischen 5 und 95 Gew%, bevorzugt zwischen 10 und 90 Gew%, besonders bevorzugt zwischen 20 und 80 Gew% variieren.

In einer Variante kann die Abrasionsschicht
50 bis 90 Gew%, bevorzugt 60 bis 80 Gew%, insbesondere bevorzugt 70 Gew% einer ersten Faserart, und
10 bis 50 Gew%, bevorzugt 20 bis 40 Gew%, insbesondere bevorzugt 30 Gew% einer zweiten Faserart
umfassen.

In einer besonders bevorzugten Ausführungsform des vorliegenden Flammenschutzgewebes besteht die mindestens eine Abrasionsschicht
50 bis 90 Gew%, bevorzugt 60 bis 80 Gew%, insbesondere bevorzugt 70 Gew% Polyacrylnitril (PAN) Fasern, und
10 bis 50 Gew%, bevorzugt 20 bis 40 Gew%, insbesondere bevorzugt 30 Gew% Para-aramid Fasern.

In einer weiteren bevorzugten Ausführungsform des vorliegenden Flammenschutzgewebes weist die mindestens eine Abrasionsschicht ein Flächengewicht zwischen 100 und 180 g/m², bevorzugt zwischen 110 und 150 g/m², insbesondere bevorzugt zwischen 130 und 140 g/m² auf.

Generell ist es vorstellbar und möglich, mehr als eine Textillage als Abrasionsschicht zu verwenden, z.B. zwei, drei oder vier.

Die Dicke der Abrasionsschicht liegt in einem Bereich zwischen 0,2 und 1 mm, bevorzugt 0,4 bis 0,8 mm, insbesondere bei 0,5 mm.

Wie oben erwähnt, kann die Abrasionsschicht ein Fasergemisch aus Fasern auf Basis z.B. von Polyaramiden (insbesondere para-Aramid) und Polyacrylnitril umfassen bzw. aus diesen Fasern bestehen.

Polyaramide (aromatische Polyamide) sind Polyamide, bei denen die Amidgruppen an aromatischen Gruppen gebunden sind. Aramide zählen zu den Flüssigkristallpolymeren (FKP). Die wichtigsten Typen sind Poly(p-phenylenterephthalamid) (PPTA, Handelsnamen: Kevlar, Twaron) und Poly(m-phenylenisophthalamid) (PMPI, Handelsnamen: Nomex, Teijinconex)

Polyacrylnitrilfasern (PAN-Fasern) bestehen typischerweise aus 100% Poylacrylnitril. PAN-Fasern sind hart, steif, chemikalien- und lösungsmittelbeständig und weisen einen Schmelzpunkt oberhalb der Zersetzungstemperatur auf. Es können auch Copolymer-Fasern verwendet werden, die aus Polyacrylnitril (Anteil >85 %) und Polymethylmethacrylat bestehen.

Die mindestens eine Abrasionsschicht ist bevorzugt durchgängig flächig auf die mindestens eine Barriereschicht aufgetragen, und liegt demnach bevorzugt nicht in Form eines Gitternetzes oder Gittergewebes vor.

Wie oben angeführt, besteht die mindestens eine Barriereschicht aus mindestens einem Faservlies aus mindestens einer flammenfesten Faserart.

Faservliese (oder Vliesstoffe) sind Gebilde aus Fasern begrenzter Länge, Endlosfasern (Filamenten) oder geschnittenen Garnen jeglicher Art und jeglichen Ursprungs, die auf irgendeine Weise zu einem Vlies (einer Faserschicht, einem Faserflor) zusammengefügt und auf irgendeine Weise miteinander verbunden worden sind, wobei ein Verkreuzen bzw. Verschlingen von Garnen, wie es beim Weben, Wirken, Stricken (siehe oben) geschieht, ausgenommen sind. Vliesstoffe sind größtenteils flexible textile Flächengebilde, d. h. sie sind leicht biegsam, ihre Hauptstrukturelemente sind textile Fasern und sie weisen eine vergleichsweise geringe Dicke gegenüber ihrer Länge und Breite auf.

Im vorliegenden Fall sind die Fasern des als Barriereschicht verwendeten Faservlieses vernadelt und anschließend geglättet, bzw. kalandriert (bzw. zwischen zwei Walzen verpresst oder gebügelt).

In einer Ausführungsform kann die in der Barriereschicht verwendete Faserart synthetische oder natürliche Fasern umfassen. Bevorzugt umfasst die Barriereschicht synthetische Fasern in Form vom Polymerfasern ausgewählt aus der Gruppe der Polyacrylnitrilfasern (PAN-Faser), preoxidierte PAN-Fasern, Acrylnitril-Fasern (z.B. Pyrotex), Polyaramid-Fasern, Kynol-Novoloid, para-aramid (Kevlar), meta-aramid (Nomex), Basalt-Faser, Polykieselsäure (SIALOXOL-Verbindungen), Carbon-Faser verwendet werden.

In einer weiteren Ausführungsform des vorliegenden Flammenschutzgewebes kann die Barriereschicht auch aus mehr als einer Faserart bestehen. Bevorzugt sind zwei, drei oder vier verschiedene Faserarten, wobei Faserart und Faseranteile beliebig kombiniert und variiert werden können.

So können im Falle der Verwendung von zwei Faserarten in der Barriereschicht die quantitativen Anteile jeweils beliebig in einem Bereich zwischen 5 und 95 Gew%, bevorzugt zwischen 10 und 90 Gew%, besonders bevorzugt zwischen 20 und 80 Gew% variieren.

Im Falle der Verwendung von drei Faserarten können die quantitativen Anteile wie folgt aussehen:
50 bis 90 Gew%, bevorzugt 60 bis 80 Gew%, insbesondere bevorzugt 70 Gew% einer ersten Faserart,
5 bis 30 Gew%, bevorzugt 10 bis 20 Gew%, insbesondere bevorzugt 15 Gew% einer zweiten Faserart, und
5 bis 30 Gew%, bevorzugt 10 bis 20 Gew%, insbesondere bevorzugt 15 Gew% einer dritten Faserart.

In einer besonders bevorzugten Ausführungsform des vorliegenden Flammenschutzgewebes besteht die mindestens eine Barriereschicht
50 bis 90 Gew%, bevorzugt 60 bis 80 Gew%, insbesondere bevorzugt 70 Gew% Acrylnitril-Fasern (wie Pyrotex Faser),
5 bis 30 Gew%, bevorzugt 10 bis 20 Gew%, insbesondere bevorzugt 15 Gew% Para-amid Fasern, und
5 bis 30 Gew%, bevorzugt 10 bis 20 Gew%, insbesondere bevorzugt 15 Gew% pre-oxidierte Polyacrylnitril (preox PAN) Fasern.

In einer weiteren bevorzugten Ausführungsform des vorliegenden Flammenschutzgewebes weist die mindestens eine Barriereschicht ein Flächengewicht zwischen 50 und 150 g/m², bevorzugt zwischen 60 und 120 g/m², insbesondere bevorzugt zwischen 70 und 100 g/m² auf.

Die Dicke der Barriereschicht liegt zwischen 0,7 und 1,3 mm, bevorzugt zwischen 0,9 und 1,2 mm, bevorzugt zwischen 1,0 und 1,2 mm.

Auch im Falle der Barrierschicht ist es generell vorstellbar und möglich, mehr als eine Vlieslage als Barriereschicht zu verwenden, z.B. zwei, drei oder vier.

Wie oben bereits erwähnt, kann die Barriereschicht aus einem Fasergemisch von Fasern auf der Basis von Acrylnitril-Fasern (wie Pyrotex), pre-oxidierten Polyacrylniril-Fasern und Para-Aramid Fasern bestehen.

Pyrotex-Fasern sind flammbeständige Fasern auf der Basis von Acrylnitril. Pyrotex-Fasern weisen sich durch eine hohe Säure/Basenbeständigkeit; UV Beständigkeit, Lösemittel-, Hydrolyse- und Oxidationsbeständigkeit und Dauertemperaturbeständig bis max. 250°C aus. Pre-oxidierte Polyacrylnitril-Fasern (preox PAN Faser) sind oxidierte PAN Fasern mit einer sehr hohen Flammenbeständigkeit.

Das vorliegende Flammenschutzgewebe ist frei von Füllstoffen, wie anorganischen Füllstoffen, oder anderen Additiven. Zudem weist es keine Silikonbeschichtung oder ähnliches, wie oftmals in der Vergangenheit verwendet auf.

Gemäß der Erfindung umfasst das vorliegende Flammenschutzgewebe mindestens eine Intumeszenz-Schicht auf. Im Kontext der vorliegenden Erfindung bezeichnet der Begriff der Intumeszenz eine Ausdehnung oder eine Anschwellung, also eine Volumenzunahme eines festen Körpers bzw. Materials. Intumeszente Materialien nehmen unter Hitzeeinwirkung an Volumen zu und entsprechend an Dichte ab.

Gemäß der Erfindung besteht die mindestens eine Intumeszenz-Schicht aus Blähgraphit.

Blähgraphit, auch expandierbarer Graphit genannt, wird aus dem natürlich vorkommenden Mineral Graphit hergestellt. Eine Graphitflocke besteht aus Schichten von wabenförmig angeordneten Kohlenstoffatomen. Innerhalb der Schichten sind die Atome durch kovalente Bindungen sehr fest verbunden. Zwischen den Schichten herrschen nur schwache Bindungskräfte, so dass Moleküle zwischen die Graphitschichten eingelagert (interkaliert) werden können. Durch die Einlagerung von Säuren, üblicherweise Schwefelsäure, wird Graphit in Blähgraphit umgewandelt. Wird Blähgraphit erhitzt, expandieren die Graphitflocken je nach Qualität, ab einer Temperatur von ca. 140°C, vorliegend bei ca. 180°C auf ein Vielfaches des ursprünglichen Volumens an. Durch das Verdampfen der eingelagerten Verbindungen werden die Graphitschichten ziehharmonikaartig auseinandergetrieben. Die expandierten Flocken haben eine "würmchenartige" Erscheinungsform und sind üblicherweise mehrere Millimeter lang. Eine der Hauptanwendungen von Blähgraphit stellt der Flammenschutz dar. Bei Hitzeeinwirkung expandiert der Blähgraphit und bildet eine Intumeszenzschicht auf der Materialoberfläche. Dies verlangsamt die Brandausweitung und wirkt den für den Menschen gefährlichsten Brandfolgen, nämlich der Bildung toxischer Gase und Rauch, entgegen.

Die mindestens eine Intumeszenz-Schicht ist auf zwischen der Abrasionsschicht und der Barriereschicht als Zwischenlage vorgesehen.

Das Blähgraphit wird zunächst in ein geeignetes Bindemittel eingebracht. Anschließend wird die Abrasionsschicht mit dieser Lösung oder Suspension beschichtet.

Die mindestens eine Blähgraphitschicht weist ein Flächengewicht zwischen 30 und 110 g/m², bevorzugt zwischen 40 und 100 g/m², bevorzugt zwischen 50 und 80 g/m² auf.

Die Dicke der Blähgraphitschicht liegt zwischen 0,1 und 0,3 mm, bevorzugt zwischen 0,1 und 0,2 mm.

In einer besonders bevorzugten Ausführungsform besteht das vorliegende Flammenschutzgewebe aus mindestens einer Abrasionschicht in Form eines Gewirkes bzw. Gewebe mit mehr als 30.000 Zyklen Abriebbeständigkeit, mindestens einer Intumeszenzschicht in Form von Blähgraphit und mindestens einer Barriereschicht in Form eines Nadelfließ aus flammbeständigen Materialien.

Der Schichtaufbau des vorliegenden Flammenschutzgewebes ist (von oben nach unten gesehen): Abrasionsschicht - Intumeszenzschicht-Barriereschicht.

Die Gesamtdicke des vorliegenden Flammenschutzgewebes liegt in einem Bereich zwischen 1,5 und 2,5 mm, bevorzugt zwischen 1,8 und 2,0 mm bei einem Gesamtgewicht zwischen 200 und 300 g, bevorzugt zwischen 220 und 280 g, insbesondere bevorzugt zwischen 250 und 270 g.

Das vorliegende Flammenschutzgewebe wird in einem Verfahren mit den folgenden Schritten hergestellt:
- Bereitstellen von mindestens einem Faservlies aus mindestens einer flammenfesten Faserart als Barriereschicht, und
- Aufbringen von mindestens Textilstoff mit hoher Abriebbeständigkeit aus mindestens einer Faserart auf mindestens eine Seite des mindestens einen als Barriereschicht fungierenden Faservlieses.

In einer Ausführungsform des vorliegenden Verfahrens umfasst das als Barriereschicht verwendete Faservlies 50 bis 90 Gew%, bevorzugt 60 bis 80 Gew%, insbesondere bevorzugt 70 Gew% einer ersten Faserart, 5 bis 30 Gew%, bevorzugt 10 bis 20 Gew%, insbesondere bevorzugt 15 Gew% einer zweiten Faserart, und 5 bis 30 Gew%, bevorzugt 10 bis 20 Gew%, insbesondere bevorzugt 15 Gew% einer dritten Faserart.

Besonders bevorzugt umfasst das als Barriereschicht verwendete Faservlies 50 bis 90 Gew%, bevorzugt 60 bis 80 Gew%, insbesondere bevorzugt 70 Gew% Acrylnitril-Fasern (wie Pyrotex Faser), 5 bis 30 Gew%, bevorzugt 10 bis 20 Gew%, insbesondere bevorzugt 15 Gew% Para-amid Fasern, und 5 bis 30 Gew%, bevorzugt 10 bis 20 Gew%, insbesondere bevorzugt 15 Gew% pre-oxidierte Polyacrylnitril (preox PAN) Fasern.

In einer anderen Ausführungsform umfasst die mindestens eine Abrasionsschicht
50 bis 90 Gew%, bevorzugt 60 bis 80 Gew%, insbesondere bevorzugt 70 Gew% einer ersten Faserart, und
10 bis 50 Gew%, bevorzugt 20 bis 40 Gew%, insbesondere bevorzugt 30 Gew% einer zweiten Faserart.

In einer besonders bevorzugten Ausführungsform des vorliegenden Verfahrens besteht das als Abrasionschicht fungierende Gewebe aus 50 bis 90 Gew%, bevorzugt 60 bis 80 Gew%, insbesondere bevorzugt 70 Gew% Polyacrylnitril (PAN) Fasern und aus 10 bis 50 Gew%, bevorzugt 20 bis 40 Gew%, insbesondere bevorzugt 30 Gew% Para-aramid Fasern.

Gemäß der Erfindung ist vorgesehen, dass der mindestens eine Textilstoff als Abrasionsschicht mit mindestens einer Blähgraphit enthaltenden Intumeszenzschicht beschichtet wird.

In einer weiteren Variante des vorliegenden Verfahrens ist vorgesehen, dass der Schichtaufbau aus Abrasionsschicht, Blähgraphit enthaltende Intumeszenschicht und Barriereschicht laminiert, kaschiert, verklebt oder vernadelt wird.

Wie oben bereits angedeutet, wird das vorliegende Flammenschutzgewebe für Kissen in einem Fahrzeug, insbesondere in einem Flugzeug verwendet.

In einer Variante wird das vorliegende Flammenschutzgewebe in einer Abdeckung für ein Kissen (bevorzugt aus Schaumstoff) einer Fahrzeugstruktur, insbesondere einer Flugzeugstruktur, wie z.B. einem Flugzeugsitzkissen, verwendet, wobei auf der Oberseite des Flammenschutzgewebes mindestens ein Überzug vorgesehen ist. Dieser Überzug kann aus Leder, Kunstleder oder einem (haptisch angenehmen) Dekorstoff hergestellt sein.

Es ist wünschenswert, wenn das mindestens eine Flammenschutzgewebe auf die Innenseite (d.h. der für den Benutzer nicht sichtbaren Seite) des mindestens einen Überzuges auflaminiert, aufkaschiert, verklebt oder eingenäht wird. In dieser Variante liegt somit eine einstückige Abdeckung aus Flammenschutzgewebe und Überzug vor.

Diese Abdeckung aus Flammenschutzgewebe und Überzug kann wiederum auf ein Schaumteil (als Polster) aufgebracht werden, und so ein Kissen für eine Fahrzeugstruktur, insbesondere für einen Flugzeugstruktur wie z.B. ein Flugzeugsitzkissen, eine Rückenlehne, eine Kopfstütze, eine Armlehne oder eine Beinauflage, bereitgestellt. Hierfür wird die mindestens eine Abdeckung an dem mindestens einem Schaumteil mittels geeigneter Befestigungsmittel befestigt.

In einer anderen Variante wird das mindestens eine Flammenschutzgewebe auf mindestens einem Schaumteil verklebt und der mindestens eine Überzug wird mittels Haft- oder Flauschbänder am Flammschutzgewebe befestigt.

Die Abdeckung ist bevorzugt an die Form des Schaumteils angepasst. So kann sich die Abdeckung über die Sitzkissenvorderseite erstrecken und den Kniekehlenbereich abdecken. Das Polster besteht aus einem Formkaltschaum, insbesondere aus einem elastischen, offenzelligen Kunststoffschaum, der mit pulverförmigen oder flüssigem Flammschutzmittel, wie z.B. Melaminharz, div. Additiven oder Aluminiumhydroxid versetzt sein kann.

Die Erfindung wird nachfolgend unter Bezugnahme auf die Figuren der Zeichnungen näher erläutert. Es zeigen:
- Figur 1A: eine schematische Ansicht eines Flammenschutzgewebes gemäß einer ersten Ausführungsform, (nicht gemäß der Erfindung).
- Figur 1B: eine schematische Ansicht eines Flammenschutzgewebes gemäß einer zweiten Ausführungsform,
- Figur 2A: eine schematische Ansicht einer ersten Ausführungsform einer Abdeckung für ein Sitzkissen mit einem Flammenschutzgewebe gemäß Figur 1B;
- Figur 2B: eine schematische Ansicht einer zweiten Ausführungsform einer Abdeckung für ein Sitzkissen mit einem Flammenschutzgewebe gemäß Figur 1B; und
- Figur 3: eine schematische Ansicht eines Sitzkissens für einen Flugzeugsitz mit einer Abdeckung gemäß Figur 2.

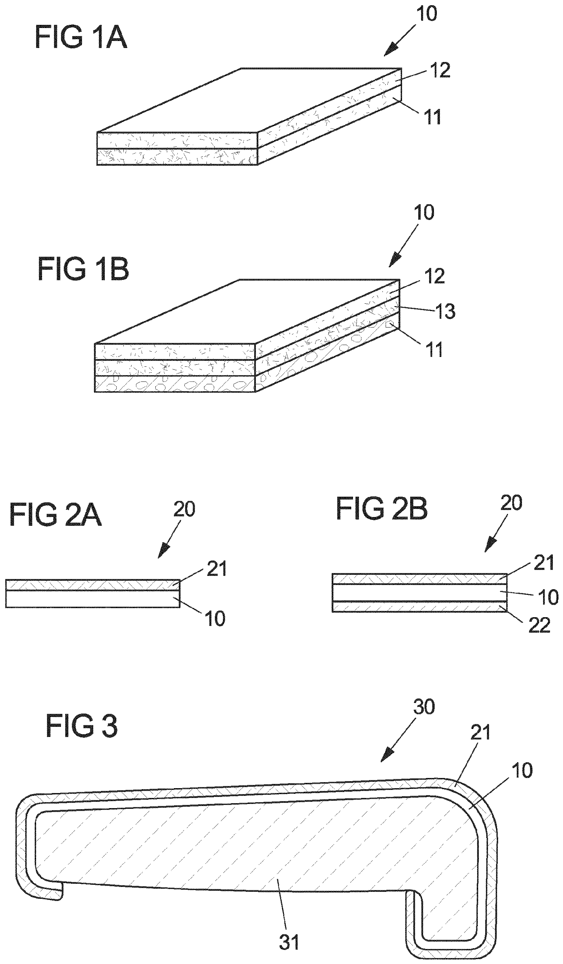

Figur 1A (nicht gemäß der Erfindung) zeigt eine erste Ausführungsform des Flammenschutzgewebes 10 aus einer Barrierschicht 11 und einer Abrasionsschicht 12. Die Abrasionsschicht 12 ist auf einer Seite (hier auf der Oberseite) der Barriereschicht 11 flächig vorgesehen.

Die Barriereschicht 11 besteht aus einem Faservlies aus 70% Pyrotex(bi-grade) Fasern (Acrylnitrilfasern), 15% para-Aramid Fasern(regeneriert) und 15% preox PAN (Polyacrylonitrile) Fasern. Das Flächengewicht der Barriereschicht 11 beträgt in diesem Fall 70g/m².

Die Abrasionsschicht 12 besteht aus einem Gewebe aus 70% PAN (Polyacrylonitril) Fasern und 30% para-Aramid Fasern. Das Flächengewicht der Abrasionsschicht liegt bei 130 g/m².

Figur 1B zeigt eine zweite Ausführungsform des Flammenschutzgewebes 10, wobei zusätzlich zu Barriereschicht 11 und Abrasionsschicht 12 eine dritte Intumeszenzschicht 13 aus Blähgraphit vorgesehen ist, wobei der Blähgraphit bei 180°C beginnt aufzublähen.

Die Blähgraphitschicht 13 ist als Zwischenlage zwischen der Abrasionsschicht 12 und der Barriereschicht 11 vorgesehen. Die Blähgraphitschicht ist mit einem Flächengewicht von 50 g/m² auf die Abrasionsschicht 12 aufgetragen.

Das als Abrasionsschicht 12 verwendete Gewebe wird zunächst einseitig mit dem Blähgraphit beschichtet und anschließend wird das als Barriereschicht 11 verwendete vernadelte Faservlies auf die beschichtete Seite der Abrasionsschicht auflaminiert bzw. kaschiert.

In Abriebtests unter Verwendung von Haftbändern erreicht das Flammenschutzgewebe aus Abrasionsschichtgewebe, Blähgraphitschicht und Barriereschichtvlies Werte von 4000 Zyklen, wohingegen aus dem Stand der Technik bekannte Gewebe (wie z.B. von 7725R von Tex Tech Industries) im Vergleich nur Werte von 500-600 Zyklen erreichen.

Im sogenannten Oil Burn Test bei Verwendung des Flammenschutzgewebes auf verschiedenen Schaumkissen sind die Werte vergleichbar mit den herkömmlichen Geweben. Die in diesem Test ermittelten Werte liegen zwischen 3 und 6 % Gewichtsverlust.

Figur 2A zeigt eine erste Ausführungsform einer Abdeckung 20 für ein Sitzkissen, insbesondere für ein Flugzeugsitzkissen. Die Abdeckung 20 umfasst das Flammenschutzgewebe 10 und einen Schutzüberzug 21 (zum Beispiel einen Lederüberzug oder Stoffüberzug). Flammenschutzgewebe 10 und Schutzüberzug 21 können miteinander verklebt oder laminiert sein, so dass die Abdeckung einstückig vorliegt.

Figur 2B zeigt eine zweite Ausführungsform einer Abdeckung 20 für ein Sitzkissen, insbesondere für ein Flugzeugsitzkissen. Hier können das Flammenschutzgewebe 10 und ein Schaumteil 22 aus div. Schäumen miteinander verklebt oder laminiert sein. An dem Aufbau aus Flammenschutzgewebe 10 und Schaumteil 22 wird ein Schutzüberzug 21 mittels Haft- oder Flauschbänder befestigt.

Figur 3 zeigt den allgemeinen Aufbau eines Sitzkissens 30 für einen Flugzeugsitz. Ein Polster 31 dass mit dem Flammschutzgewebe 10 vollständig umgeben ist. Der Schutzüberzug 21 ist mit dem Polster 31 inkl. Flammschutzgewebe 10 mittels Haft oder Flauschbänder befestigt.

Die Abdeckung 20 aus dem Flammenschutzgewebe 10 und einem Schutzüberzug 21 deckt das Polster 31 ab. Die Abdeckung 20 ist auf der Unterseite des Polsters 31 mittels geeigneter Befestigungsmittel wie zum Beispiel Haken oder Ösen, Knöpfen, Haft- oder Flauschbändern befestigt. Die Abdeckung 20 erstreckt sich über die gesamte Oberseite des Polsters 31 inklusive des Kniekehlenbereiches.

## Patentansprüche

1. Flammenschutzgewebe für Fahrzeugkissen, insbesondere für Flugzeugkissen, bereitgestellt, wobei das Flammenschutzgewebe folgende Schichten umfasst:
- mindestens eine erste abriebfeste Schicht als Abrasionsschicht umfassend mindestens einen Textilstoff mit einer Abriebbeständigkeit von mindestens 30.000 Zyklen (bestimmt gemäß Martinedale DIN ISO 12947 1;BS 5960; 1988) aus mindestens einer Faserart, und
- mindestens eine zweite Schicht als Barriereschicht umfassend mindestens ein Faservlies aus mindestens einer flammenfesten Faserart,
wobei die mindestens eine Abrasionsschicht als erste Schicht auf mindestens einer Seite der mindestens einen Barriereschicht als zweite Schicht vorgesehen ist,
**gekennzeichnet durch**
mindestens eine Intumeszenz-Schicht aus Blähgraphit vorgesehen als Zwischenlage zwischen der mindestens einen Abrasionsschicht und der mindestens einen Barriereschicht,
wobei die die mindestens eine Blähgraphitschicht ein Flächengewicht zwischen 30 und 110 g/m² aufweist.

2. Flammenschutzgewebe nach Anspruch 1, **dadurch gekennzeichnet, dass** die mindestens eine Abrasionsschicht aus einem Textilstoff aus 50 bis 90 Gew%, bevorzugt 60 bis 80 Gew%, insbesondere bevorzugt 70 Gew% einer ersten Faserart, und 10 bis 50 Gew%, bevorzugt 20 bis 40 Gew%, insbesondere bevorzugt 30 Gew% einer zweiten Faserart besteht.

3. Flammenschutzgewebe nach einem der vorhergehenden Ansprüche, **dadurch gekennzeichnet, dass** die mindestens eine Abrasionsschicht aus einem Textilstoff aus 50 bis 90 Gew%, bevorzugt 60 bis 80 Gew%, insbesondere bevorzugt 70 Gew% Polyacrylnitril (PAN) Fasern und 10 bis 50 Gew%, bevorzugt 20 bis 40 Gew%, insbesondere bevorzugt 30 Gew% Para-aramid Fasern besteht.

4. Flammenschutzgewebe nach einem der vorhergehenden Ansprüche, **dadurch gekennzeichnet, dass** die mindestens eine Abrasionsschicht ein Flächengewicht zwischen 100 und 180 g/m², bevorzugt zwischen 110 und 150 g/m², insbesondere bevorzugt zwischen 130 und 140 g/m² aufweist.

5. Flammenschutzgewebe nach einem der vorhergehenden Ansprüche, **dadurch gekennzeichnet, dass** die mindestens eine Abrasionsschicht eine Abriebbeständigkeit von mindesten 45.000 Zyklen, insbesondere von mindestens 55.000 Zyklen (bestimmt gemäß Martinedale DIN ISO 12947 1;BS 5960; 1988) aufweist.

6. Flammenschutzgewebe nach einem der vorhergehenden Ansprüche, **dadurch gekennzeichnet, dass** die mindestens eine Barriereschicht aus mindestens einem Faservlies aus mindesten drei Faserarten mit 50 bis 90 Gew%, bevorzugt 60 bis 80 Gew%, insbesondere bevorzugt 70 Gew% einer ersten Faserart, 5 bis 30 Gew%, bevorzugt 10 bis 20 Gew%, insbesondere bevorzugt 15 Gew% einer zweiten Faserart, und 5 bis 30 Gew%, bevorzugt 10 bis 20 Gew%, insbesondere bevorzugt 15 Gew% einer dritten Faserart besteht.

7. Flammenschutzgewebe nach einem der vorhergehenden Ansprüche, **dadurch gekennzeichnet, dass** die mindestens eine Barriereschicht aus mindestens einem Faservlies aus 50 bis 90 Gew%, bevorzugt 60 bis 80 Gew%, insbesondere bevorzugt 70 Gew% Acrylnitril-Fasern (Pyrotex Faser), 5 bis 30 Gew%, bevorzugt 10 bis 20 Gew%, insbesondere bevorzugt 15 Gew% Para-amid Fasern, und 5 bis 30 Gew%, bevorzugt 10 bis 20 Gew%, insbesondere bevorzugt 15 Gew% pre-oxidierte Polyacrylnitril (preox PAN) Fasern besteht.

8. Flammenschutzgewebe nach einem der vorhergehenden Ansprüche, **dadurch gekennzeichnet, dass** die mindestens eine Barriereschicht ein Flächengewicht zwischen 50 und 150 g/m², bevorzugt zwischen 60 und 120 g/m², insbesondere bevorzugt zwischen 70 und 100 g/m² aufweist.

9. Flammenschutzgewebe nach einem der vorhergehenden Ansprüche, **dadurch gekennzeichnet, dass** die mindestens eine Blähgraphitschicht ein Flächengewicht zwischen 40 und 100 g/m², bevorzugt zwischen 50 und 80 g/m² aufweist.

10. Verfahren zur Herstellung eines Flammenschutzgewebes nach einem der vorhergehenden Ansprüche umfassend die Schritte:
- Bereitstellen von mindestens einem Faservlies aus mindestens einer flammenfesten Faserarten als Barriereschicht, und
- Aufbringen von mindestens einem Textilstoff mit hoher Abriebfestigkeit als Abrasionsschicht aus mindestens einer Faserart auf mindestens eine Seite des mindestens einen Faservlieses,
**dadurch gekennzeichnet, dass**.
der mindestens eine Textilstoff als Abrasionsschicht vor dem Aufbringen auf die mindestens auf die mindestens eine Barriereschicht auf einer Seite mit mindestens einer Intumeszenzschicht aus Blähgraphit beschichtet wird, wobei die mindestens eine Blähgraphitschicht ein Flächengewicht zwischen 30 und 110 g/m² aufweist.

11. Verfahren nach Anspruch 10, **dadurch gekennzeichnet, dass** der Schichtaufbau aus Abrasionsschicht, Intumeszenschicht und Barriereschicht laminiert, kaschiert, verklebt, oder vernadelt wird.

12. Abdeckung für ein Fahrzeugkissen, insbesondere ein Flugzeugkissen, umfassend
- mindestens ein Flammenschutzgewebe nach einem der Ansprüche 1 bis 9, und
- mindestens einen auf der Oberseite des Flammenschutzgewebes vorgesehenen Überzug.

13. Kissen für einen Fahrzeugsitz, insbesondere für einen Flugzeugsitz, umfassend
- mindestens einen Überzug,
- mindestens ein Flammenschutzgewebe nach einem der Ansprüche 1 bis 9,
- mindestens einen Schaumteil als Polster.

14. Kissen nach Anspruch 13, **dadurch gekennzeichnet, dass** das Flammenschutzgewebe mit dem Überzug laminiert, kaschiert, verklebt oder vernäht ist und mittels Haft- oder Flauschbändern am Schaumteil befestigt wird

## Claims

1. A flame-retardant fabric provided for vehicle cushions, in particular for aircraft cushions, wherein the flame-retardant fabric comprises the following layers:
- at least one first abrasion-resistant layer as an abrasion layer comprising at least one textile material with an abrasion resistance of at least 30,000 cycles (determined according to Martinedale DIN ISO 12947 1; BS 5960; 1988) of at least one type of fiber, and
- at least one second layer as a barrier layer comprising at least one nonwoven fabric of at least one flame-resistant type of fiber,
wherein the at least one abrasion layer is provided as a first layer on at least one side of the at least one barrier layer as a second layer,
**characterized by**
at least one intumescent layer of expandable graphite provided as an intermediate layer between the at least one abrasion layer and the at least one barrier layer, wherein the at least one expandable graphite layer has a basis weight of between 30 and 110 g/m².

2. The flame-retardant fabric according to claim 1, **characterized in that** the at least one abrasion layer consists of a textile material of 50 to 90 wt-%, preferably 60 to 80 wt-%, more preferably 70 wt-% of a first type of fiber, and 10 to 50 wt-%, preferably 20 to 40 wt-%, more preferably 30 wt-% of a second type of fiber.

3. The flame-retardant fabric according to any of the preceding claims, **characterized in that** the at least one abrasion layer consists of a textile material of 50 to 90 wt-%, preferably 60 to 80 wt-%, more preferably 70 wt-%, of polyacrylonitrile (PAN) fibers and 10 to 50 wt-%, preferably 20 to 40 wt-%, more preferably 30 wt-% of para-aramide fibers.

4. The flame-retardant fabric according to any of the preceding claims, **characterized in that** the at least one abrasion layer has a basis weight of between 100 and 180 g/m², preferably between 110 and 150 g/m², more preferably between 130 and 140 g/m².

5. The flame-retardant fabric according to any of the preceding claims, **characterized in that** the at least one abrasion layer has an abrasion resistance of at least 45,000 cycles, in particular of at least 55,000 cycles (determined according to Martinedale DIN ISO 12947 1; BS 5960; 1988).

6. The flame-retardant fabric according to any of the preceding claims, **characterized in that** the at least one barrier layer consists of at least one non-woven fabric comprising at least three types of fiber with 50 to 90 wt-%, preferably 60 to 80 wt-%, more preferably 70 wt-% of a first type of fiber, 5 to 30 wt-%, preferably 10 to 20 wt-%, more preferably 15 wt-% of a second type of fiber, and 5 to 30 wt-%, preferably 10 to 20 wt-%, more preferably 15 wt-% of a third type of fiber.

7. The flame-retardant fabric according to any of the preceding claims, **characterized in that** the at least one barrier layer consists of at least one non-woven fabric comprising 50 to 90 wt-%, preferably 60 to 80 wt-%, more preferably 70 wt-% of acrylonitrile fibers (Pyrotex fibers), 5 to 30 wt-%, preferably 10 to 20 wt-%, more preferably 15 wt-% of para-amide fibers, and 5 to 30 wt-%, preferably 10 to 20 wt-%, more preferably 15 wt-% of pre-oxidized polyacrylonitrile (preox PAN) fibers.

8. The flame-retardant fabric according to any of the preceding claims, **characterized in that** the at least one barrier layer has a basis weight of between 50 and 150 g/m², preferably between 60 and 120 g/m², in particular preferably between 70 and 100 g/m².

9. The flame-retardant fabric according to any of the preceding claims, **characterized in that** the at least one expandable graphite layer has a basis weight of between 40 and 100 g/m², preferably between 50 and 80 g/m².

10. A method of producing a flame-retardant fabric according to any of the preceding claims, comprising the following steps:
- providing at least one non-woven fabric comprising at least one flame-resistant type of fiber as a barrier layer, and
- applying at least one textile material with high abrasion resistance as an abrasion layer comprising at least one type of fiber to at least one side of the at least one non-woven fabric,
**characterized in that** the at least one textile material as an abrasion layer is coated on one side with at least one intumescent layer of expandable graphite prior to application to the at least one barrier layer, wherein the at least one expandable graphite layer has a basis weight of between 30 and 110 g/m².

11. The method according to claim 10, **characterized in that** the layer structure of abrasion layer, intumescent layer and barrier layer is laminated, lined, bonded, or needled.

12. A cover for a vehicle cushion, in particular an aircraft cushion, comprising
- at least one flame-retardant fabric according to any of claims 1 to 9, and
- at least one coating provided on the upper side of the flame-retardant fabric.

13. A cushion for a vehicle seat, in particular for an aircraft seat, comprising
- at least one coating,
- at least one flame-retardant fabric according to any of claims 1 to 9,
- at least one foam part as padding.

14. The cushion according to claim 13, **characterized in that** the flame-retardant fabric is laminated, lined, bonded or sewn to the coating and secured to the foam part by means of adhesive or velvet tapes.

## Revendications

1. Tissu ignifuge pour coussins de véhicule, en particulier pour coussins d'avion, le tissu ignifuge comprenant les couches suivantes :
- au moins une première couche résistante à l'abrasion comme couche d'abrasion comprenant au moins une matière textile avec une résistance à l'abrasion d'au moins 30.000 cycles (déterminée selon Martinedale DIN ISO 12947 1 ; BS 5960 ; 1988) d'au moins un type de fibre, et
- au moins une deuxième couche comme couche barrière comprenant au moins un tissu non-tissé constitué d'au moins un type de fibre résistant à la flamme,
dans lequel ladite au moins une couche d'abrasion est prévue comme première couche sur au moins une face de ladite au moins une couche barrière comme deuxième couche,
**caractérisé par**
au moins une couche intumescente en graphite expansé est prévue comme couche intermédiaire entre ladite au moins une couche d'abrasion et ladite au moins une couche barrière,
ladite au moins une couche de graphite expansé présentant un poids par unité de surface compris entre 30 et 110 g/m².

2. Tissu ignifuge selon la revendication 1, **caractérisé en ce que** ladite au moins une couche d'abrasion est constituée d'une matière textile comprenant 50 à 90 % en poids, de préférence 60 à 80 % en poids, notamment de préférence 70 % en poids d'un premier type de fibre, et 10 à 50 % en poids, de préférence 20 à 40 % en poids, notamment de préférence 30 % en poids d'un deuxième type de fibre.

3. Tissu ignifuge selon l'une quelconque des revendications précédentes, **caractérisé en ce que** ladite au moins une couche d'abrasion est constituée d'une matière textile comprenant 50 à 90 % en poids, de préférence 60 à 80 % en poids, notamment de préférence 70 % en poids de fibres de polyacrylonitrile (PAN) et 10 à 50 % en poids, de préférence 20 à 40 % en poids, notamment de préférence 30 % en poids de fibres de para-aramide.

4. Tissu ignifuge selon l'une quelconque des revendications précédentes, **caractérisé en ce que** ladite au moins une couche d'abrasion présente un poids par unité de surface compris entre 100 et 180 g/m², de préférence entre 110 et 150 g/m², notamment de préférence entre 130 et 140 g/m².

5. Tissu ignifuge selon l'une quelconque des revendications précédentes, **caractérisé en ce que** ladite au moins une couche d'abrasion présente une résistance à l'abrasion d'au moins 45.000 cycles, en particulier d'au moins 55.000 cycles (déterminée selon Martinedale DIN ISO 12947 1 ; BS 5960 ; 1988).

6. Tissu ignifuge selon l'une quelconque des revendications précédentes, **caractérisé en ce que** ladite au moins une couche barrière est constituée d'au moins un tissu non-tissé comprenant au moins trois types de fibre avec 50 à 90 % en poids, de préférence 60 à 80 % en poids, notamment de préférence 70 % en poids d'un premier type de fibre, 5 à 30 % en poids, de préférence 10 à 20 % en poids, notamment de préférence 15 % en poids d'un deuxième type de fibre, et 5 à 30 % en poids, de préférence 10 à 20 % en poids, notamment de préférence 15 % en poids d'un troisième type de fibre.

7. Tissu ignifuge selon l'une quelconque des revendications précédentes, **caractérisé en ce que** ladite au moins une couche barrière est constituée d'au moins un tissu non-tissé comprenant 50 à 90 % en poids, de préférence 60 à 80 % en poids, notamment de préférence 70 % en poids de fibres d'acrylonitrile (fibres Pyrotex), 5 à 30 % en poids, de préférence 10 à 20 % en poids, notamment de préférence 15 % en poids de fibres de para-aramide, et 5 à 30 % en poids, de préférence 10 à 20 % en poids, notamment de préférence 15 % en poids de fibres de polyacrylonitrile préoxydées (fibres préox PAN).

8. Tissu ignifuge selon l'une quelconque des revendications précédentes, **caractérisé en ce que** ladite au moins une couche barrière présente un poids par unité de surface compris entre 50 et 150 g/m², de préférence entre 60 et 120 g/m², notamment de préférence entre 70 et 100 g/m².

9. Tissu ignifuge selon l'une quelconque des revendications précédentes, **caractérisé en ce que** ladite au moins une couche de graphite expansé présente un poids par unité de surface compris entre 40 et 100 g/m², de préférence entre 50 et 80 g/m².

10. Procédé de fabrication d'un tissu ignifuge selon l'une quelconque des revendications précédentes, comprenant les étapes suivantes :
- prévoir au moins un tissu non-tissé comprenant au moins un type de fibre ignifugée comme couche barrière, et
- appliquer au moins une matière textile présentant une résistance élevée à l'abrasion comme couche d'abrasion constituée d'au moins un type de fibres sur au moins une face de l'au moins un tissu non-tissé,
**caractérisé en ce que** l'au moins une matière textile est revêtue sur une face, comme couche d'abrasion, d'au moins une couche intumescente de graphite expansé avant l'application sur l'au moins une couche barrière, l'au moins une couche de graphite expansé présentant un poids par unité de surface compris entre 30 et 110 g/m².

11. Procédé selon la revendication 10, **caractérisé en ce que** la structure stratifiée de la couche d'abrasion, de la couche intumescente et de la couche barrière est laminée, contrecollée, collée, ou aiguilletée.

12. Couverture pour un coussin de véhicule, en particulier un coussin d'avion, comprenant
- au moins un tissu ignifuge selon l'une quelconque des revendications 1 à 9, et
- au moins un revêtement prévu sur la face supérieure du tissu ignifuge.

13. Coussin pour un siège de véhicule, en particulier pour un siège d'avion, comprenant
- au moins un revêtement,
- au moins un tissu ignifuge selon l'une quelconque des revendications 1 à 9, et
- au moins une partie en mousse comme rembourrage.

14. Coussin selon la revendication 13, **caractérisé en ce que** le tissu ignifuge est laminé, contrecollé, collé ou cousu avec le revêtement et est fixé à la partie en mousse au moyen de bandes adhésives ou de bandes velours.
